**Europäisches Patentamt**

**European Patent Office**

**Office européen des brevets**

(11) Veröffentlichungsnummer: **0 499 807 A1**

# EUROPÄISCHE PATENTANMELDUNG

(21) Anmeldenummer: **92100931.2**

(22) Anmeldetag: **21.01.92**

(51) Int. Cl.⁵: **B23B 31/20**

(30) Priorität: **22.02.91 DE 4105688**

(43) Veröffentlichungstag der Anmeldung:
**26.08.92 Patentblatt 92/35**

(84) Benannte Vertragsstaaten:
**BE DE ES FR IT PT SE**

(71) Anmelder: **Junker, Erwin**
**Junkerstrasse 2**
**W-7618 Nordrach/Baden(DE)**

(72) Erfinder: **Junker, Erwin**
**Junkerstrasse 2**
**W-7618 Nordrach/Baden(DE)**

(74) Vertreter: **Rost, Jürgen et al**
**Patent- und Rechtsanwälte**
**Bardehle-Pagenberg-Dost-Altenburg**
**Frohwitter-Geissler & Partner Galileiplatz 1**
**W-8000 München 80(DE)**

(54) **Spannvorrichtung für den Schaft eines Werkstückrohlings.**

(57) Es wird eine Spannvorrichtung für den Schaft (S) insbesondere eines an seinen Enden zu beschleifenden Tellerventilkörpers (18) vorgeschlagen, wobei in einem Grundkörper (1) eines drehbaren Gehäuses zwei Spannzangen (13) mit konischer, sich zu ihren Außenenden hin erweiternder Außenkontur vorgesehen sind, welche sich im gespannten Zustand der Kontur des von ihr gehaltenen, jedoch nicht verformten Schaftes (S) anpassen, wobei jede Spannzange (13) von einem Spannteil (7) in ihrer Einspannlage gehalten ist und jedes Spannteil (7), dessen Innenumfang dem Außenumfang der Spannzange (13) angepaßt ist, von Betätigungsorganen (4,15) axial verschiebbar ist.

FIG. 1

EP 0 499 807 A1

Die Erfindung betrifft eine Spannvorrichtung für den Schaft eines langgestreckten, an seinen Enden zu beschleifenden Werkstückrohlings, insbesondere eines Tellerventilkörpers.

Herstellungsbedingt sind die Schäfte derartiger Werkstückrohlinge nach ihrer Vorformung nicht exakt gerade, sondern beispielsweise gebogen, wobei eine solche Biegung so gering sein kann, daß sie äußerlich nicht wahrnehmbar ist. Wenn aus derartigen Rohlingen Tellerventilkörper hergestellt werden sollen, ist ein mehrstufiger Bearbeitungsvorgang erforderlich, um sowohl den langgestreckten Schaft als auch den Kopf und das Ende des Tellerventilkörpers in die erforderliche Form zu bringen.

Derartige Spannvorrichtungen finden auch Anwendung beim Beschleifen von Keramikventilen. Keramikventile lassen sich vor dem Schleifen nicht richten und sind deshalb bedingt durch die Herstellung der Rohlinge nicht gerade.

Demzufolge besteht die Aufgabe der Erfindung darin, eine Spannvorrichtung anzugeben, welche ein Fixieren des Werkstückes derart gestattet, daß die ursprüngliche Form des Schaftes des Werkstückes beibehalten wird und der Kopf einschließlich Ventilsitzfläche, Außendurchmesser, Fase und Planfläche sowie dessen Ende in die gewünschte Form gebracht werden kann. Mit anderen Worten sollen sich die Spannelemente der gekrümmten, nicht geraden Form des Ventilschaftes anpassen, damit dieser nicht im elastischen Werkstoff-Bereich verformt wird und danach in seine ursprüngliche Form "zurückfedert".

Diese Aufgabe wird erfindungsgemäß dadurch gelöst, daß in einem Grundkörper eines drehbaren Gehäuses zwei Spannzangen mit konischer, sich zu ihren Außenenden hin erweiternder Außenkontur vorgesehen sind, welche sich im gespannten Zustand der Kontur des von ihr gehaltenen, jedoch nicht verformten Schaftes anpassen und daß jede Spannzange von einem unter dem Einfluß einer vorgespannten Feder stehenden Spannteil in ihrer Einspannlage gehalten ist, wobei jedes Spannteil, dessen Innenumfang dem Außenumfang der Spannzange angepaßt ist, von einem Betätigungsorgan axial verschiebbar ist.

Zweckmäßige Weiterbildungen der Spannvorrichtung gemäß der Erfindung ergeben sich aus den Ansprüchen 2 bis 8.

Der wesentliche Vorteil dieser erfindungsgemäßen Ausbildung der Spannvorrichtung besteht darin, daß der zu bearbeitende Werkstückrohling, insbesondere ein Ventilkörperrohling, mit seinem Schaft so eingespannt werden kann, daß er sich dabei nicht verformt. Damit ist es möglich, die Enden des Werkstückrohlings in die gewünschte Form zu bringen, beispielsweise zu schleifen. Nach diesem Vorgang wird das teilweise fertige Werkstück aus der Spannvorrichtung entnommen und mit seinen beiden Enden (in einer anderen Vorrichtung) eingespannt, so daß nunmehr der Schaft geschliffen werden kann, wobei die beiden Enden des Tellerventilkörpers nicht weiter zu beschleifen sind.

Die erfindungsgemäße Spannvorrichtung ist technisch nicht aufwendig und leicht zu warten, sie ist insbesondere zum Schleifen von Ventilkörpern aus metallischen oder keramischen Werkstoffen bestens geeignet.

Weitere Vorteile ergeben sich aus der nachfolgenden Erläuterung der Erfindung an einem Ausführungsbeispiel anhand der beigefügten Zeichnung.

In der Zeichnung zeigen:

Fig. 1    eine teilweise geschnittene Teilansicht einer Spannvorrichtung,

Fig. 2    eine Stirnansicht der Spannvorrichtung nach Fig. 1,

Fig. 3    eine teilweise geschnittene Teilansicht der Spannvorrichtung mit eingespanntem Tellerventil,

Fig. 4    eine weitere, teilweise geschnittene Ansicht der Spannvorrichtung in einer Schleifanordnung, wobei die Krümmung des Ventilschaftes senkrecht zur Zeichnungsebene vorhanden ist.

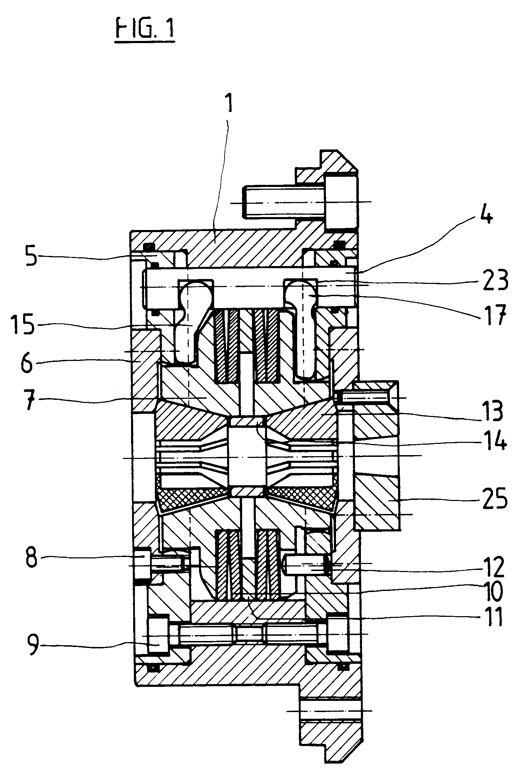

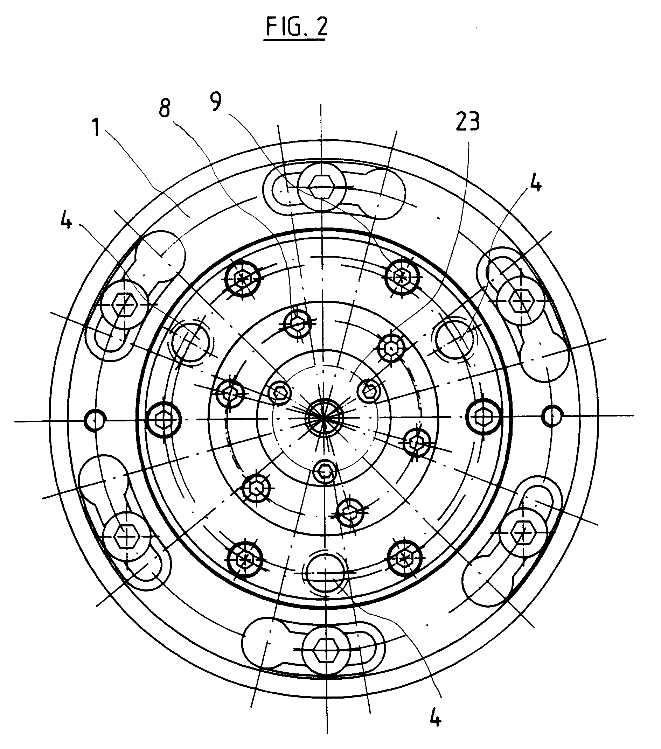

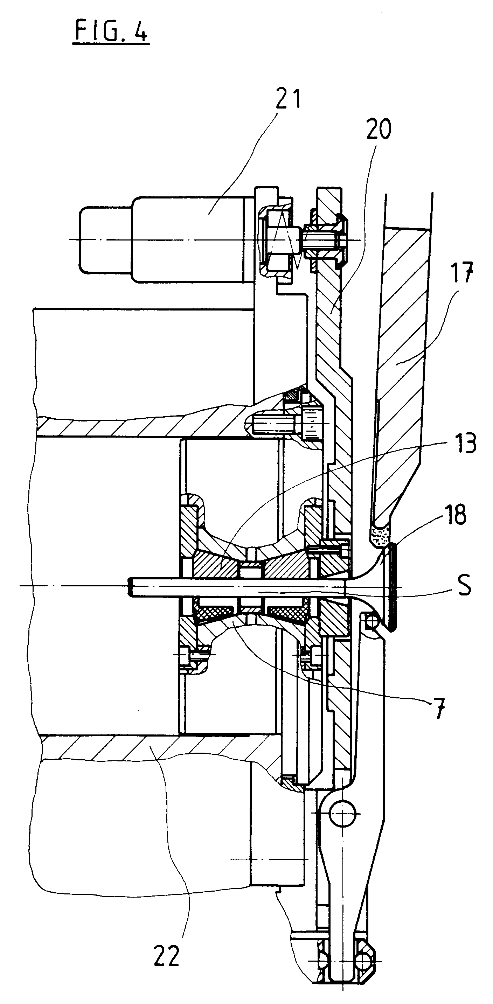

In Fig. 1 ist ein Grundkörper 1 gezeigt, in welchem eine Führungsplatte 6 mittels eines Gewindebolzens 8 mit einem Führungselement 5 für einen Axialbolzen 4 verschraubt ist. Wie in Fig. 2 gezeigt ist, sind drei dieser Bolzen 4 umfangsmäßig in gleichem Abstand voneinander angeordnet. Der Bolzen 4 ist axial verschiebbar mit Hilfe einer mit ihm zusammenwirkenden Platte 20, die von einem Hydraulikzylinder 21 (siehe Fig. 4) verschiebbar ist. Der Bolzen 4 weist Aussparungen 23 auf, die der teilweisen Aufnahme zweier Betätigungshebel 15 dienen, die mit ihren Kopfenden 17 in den Aussparungen 23 sitzen.

Weiterhin sind zwei Spannzangen 13 vorgesehen, die aus mehrfach geschlitzten, als solches bekannten Rundkörpern bestehen, die durch Kegelwirkung radial zusammengedrückt werden können und zum Spannen des Schaftes S (Fig. 4) eines Tellerventilkörpers 18 dienen. Jede Spannzange 13 weist eine kegelstumpfförmige bzw. konische Außenfläche auf, an welcher je ein bewegliches Spannteil 7 anliegt, dessen Innenumfang dem Außenumfang der Spannzange 13 entspricht. Das Führungselement 5 weist ballige Innenflächen 24 auf, dadurch wird eine Winkeleinstellbarkeit der Spannteile 7 und damit auch der Spannzange 13 ermöglicht. Somit wird der Schaft S des Tellerventilkörpers 18 beim Spannen nicht verformt. Ein solches Verformen ist deshalb nicht erwünscht, weil in einem solchen Fall nach dem Beschleifen der Tellerfederventilkörper 18 in seine Ausgangslage zurückfedern und dann der Teller einen Planlauffehler aufweisen würde. Die beiden axial bewegbaren Spannteile 7 weisen Ausnehmungen zur Aufnahme zweier Tellerfederpakete 10 auf, welche vorgespannt sind und nach Fig. 1 jedes Spannteil 7 auswärts drücken. Die in Fig. 1 gezeigten Aussparungen 23 des Axialbolzens 4 dienen als Anlagefläche für die Betätigungshebel 15, die sich ihrerseits an dem Führungselement 5 abstützen. Im Spannzustand wird jedes Spannteil 7 axial auswärts gedrückt und legt sich dabei an dem Außenumfang der Spannzange 13 an, die komprimiert wird und damit den in die Mittelöffnung eingesetzten Schaft S des Tellerventilkörpers 18 in seiner Lage hält.

Zwischen den Tellerfederpaketen 10 ist ein Distanzring 11 vorgesehen, während die beiden Spannzangen 13 mit ihren inneren Enden an einer Distanzhülse 14 anliegen, wenn die Spannzange gelöst ist. Weiterhin befindet sich auf der Seite der Spannvorrichtung, auf welcher der Teller des zu beschleifenden Tellerventilkörpers 18 vorgesehen ist, eine Hülse 25 als Zentrierhilfe. Das bewegliche Spannteil 7 ist mit Hilfe eines Stiftes 12 gegen ein Verdrehen gesichert.

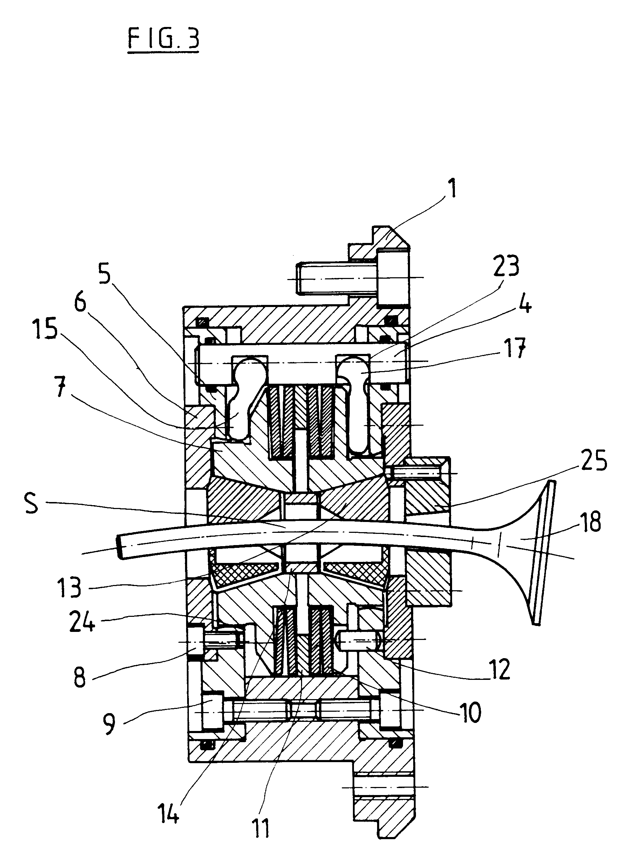

Die Funktion der Spannvorrichtung läßt sich an Fig. 4 erläutern. Der Tellerventilkörper 18 wird in die beiden Spannzangen 13 eingeführt. Danach wird ein Hydraulikzylinder 21 entspannt, so daß die Führungsplatte 20 von ihrem Druck befreit wird und dadurch die Bolzen 4, gegen welche die Platte 20 im ungespannten Zustand der Spannvorrichtung drückt, nach rechts (Fig. 1) bewegt werden können. Die Tellerfedern 10 bewegen die Kopfenden 17 der Betätigungshebel 15 nach rechts (vgl. Fig. 1), die ihrerseits die Bolzen 4 nach rechts bewegen und sich dabei in Bezug auf die Radialflächen des Führungselementes 5 und des Spannteils 7 schräg stellen. Dadurch werden die vorgespannten Tellerfedern 10 etwas entspannt, so daß sich die Spannteile 7 an die Mantelflächen der Spannzangen 13 bewegen. Es erfolgt also ein Zusammendrücken der Spannzangen 13, welche ihrerseits den Tellerventilkörper 18 in einer festen Lage halten. Hierbei ist hervorzuheben, daß das Spannteil 7 etwas axial beweglich eingepaßt ist, wie dies deutlich in Fig. 1 gezeigt ist, wobei auch seine Winkellage in Bezug auf die Mittelachse der Spannvorrichtung 1 verstellbar ist (vgl. Fig. 3).

Falls der Tellerventilkörper 18 nach seinem Beschleifen der Spannvorrichtung entnommen werden soll, erfolgt das Öffnen der Spannzange in umgekehrter Reihenfolge.

Die Spannvorrichtung mit dem Grundkörper 1 ist an einem rotierenden Gehäuse festgelegt, so daß der Tellerventilkörper 18 während des Schleifvorganges gedreht wird; die Schleifscheibe 17 ist in Fig. 4 lediglich angedeutet.

**Patentansprüche**

1. Spannvorrichtung für den Schaft eines langgestreckten, an seinen Enden zu beschleifenden Werkstückrohlings, insbesondere eines Tellerventilkörpers,
   dadurch **gekennzeichnet,**
   daß in einem Grundkörper (1) eines drehbaren Gehäuses (22) zwei Spannzangen (13) mit konischer, sich zu ihren Außenenden hin erweiternder Außenkontur vorgesehen sind, welche sich im gespannten Zustand der Kontur des von ihr gehaltenen, jedoch nicht verformten Schaftes (S) anpassen,
   daß jede Spannzange (13) von einem unter dem Einfluß einer vorgespannten Feder (10) stehenden Spannteil (7) in ihrer Einspannlage gehalten ist, und
   daß jedes Spannteil (7), dessen Innenumfang dem Außenumfang der Spannzange (13) angepaßt ist, von Betätigungsorganen (4, 15) axial verschiebbar ist.

2. Spannvorrichtung nach Anspruch 1, dadurch gekennzeichnet, daß für die Betätigungsorgane, bestehend aus den Bolzen (4) und den Betätigungshebeln (15) Führungselemente (5) vorgesehen sind, deren Innenfläche (24), die an der Außenfläche jedes Spannteiles (7) anliegt, ballig ist.

3. Spannvorrichtung nach Anspruch 1, dadurch gekennzeichnet, daß die Feder zwei Tellerfederpakete (10) umfaßt, die an den Spannteilen (7) anliegen und axial mittels eines Distanzringes (11) voneinander getrennt sind.

4. Spannvorrichtung nach Anspruch 1, dadurch gekennzeichnet, daß zwischen den Spannzangen (13) eine Distanzhülse (14) vorgesehen ist.

5. Spannvorrichtung nach Anspruch 1, dadurch gekennzeichnet, daß die Axialbolzen (4) in ihren Aussparungen (23) Betätigungshebel (15) aufnehmen, und daß jeder Betätigungshebel (15) durch Verschieben des Axialbolzens (4) in einem Druckpunkt an dem Führungselement (5) anliegt, und über die Hebelwirkung der Betätigungshebel (15) die Spannteile (7) verschoben werden, so daß die Spannzangen (13) entspannt werden.

6. Spannvorrichtung nach Anspruch 1, dadurch gekennzeichnet, daß an dem Grundkörper (1) zwei seitliche an ihm befestigte Führungsplatten (6) vorgesehen sind, welche die Spannzangen (13) und die Spannteile (7) in ihrer Lage halten.

7. Spannvorrichtung nach Anspruch 1, dadurch gekennzeichnet, daß an jedem Axialbolzen (4) eine verschiebbare Platte (20) anliegt, und daß die Platte (20) von einem Hydraulikzylinder (21) axial verschiebbar oder kippbar ist.

8. Spannvorrichtung nach Anspruch 1, dadurch gekennzeichnet, daß die Spannteile (7) mittels eines Stiftes (12) gegen ein Verdrehen gesichert sind.

FIG. 1

FIG. 2

FIG. 3

FIG. 4

**Europäisches Patentamt**

**EUROPÄISCHER RECHERCHENBERICHT**

Nummer der Anmeldung

EP    92 10 0931

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 151 166 (HONDA GIKEN KOGYO K.K.) | 1 | B23B31/20 |
| A | * Seite 2, Zeile 22 - Zeile 86; Abbildung 3 * | 3 | |
| | --- | | |
| Y | DE-A-2 317 829 (SCHAMMBERGER, D.) | 1 | |
| | * Seite 2, Absatz 2 * | | |
| | * Seite 4, Absatz 1 - Seite 5, Absatz 2 * | | |
| | * Seite 21, Absatz 2; Abbildung 1 * | | |
| | --- | | |
| A | GB-A-816 346 (HULL, H. ET AL.) | 4 | |
| | * Seite 1, Zeile 88 - Seite 2, Zeile 17; Abbildung 1 * | | |
| | --- | | |
| A | GB-A-860 927 (ERICKSON TOOL COMPANY) | 5 | |
| | * Seite 2, Zeile 73 - Seite 3, Zeile 24; Abbildungen 1,7 * | | |
| | --- | | |
| A | FR-A-1 504 212 (STATNI VYROBNY AUTODILU) | 7 | |
| | * Seite 1, Spalte 2; Abbildung 1 * | | |
| | --- | | |
| A | US-A-2 471 921 (ASHDOWN, T.) | 1 | |
| | * Spalte 2, Zeile 52 - Spalte 5, Zeile 12; Abbildungen 1-5 * | | |
| | ----- | | |

**RECHERCHIERTE SACHGEBIETE (Int. Cl.5)**

B23B

Der vorliegende Recherchenbericht wurde für alle Patentansprüche erstellt

| Recherchenort | Abschlußdatum der Recherche | Prüfer |
|---|---|---|
| DEN HAAG | 29 MAI 1992 | BERGSTROEM J.E. |